# EUROPEAN PATENT APPLICATION

(11) **EP 4 759 660 A1**
(43) Date of publication of application: **17.06.2026**
(21) Application number: 25202274.4
(22) Date of filing: 15.09.2025
(51) Int. Cl.: B60W 50/14, B60W 60/00

(54) **VEHICLE AND METHOD FOR CONTROLLING THE SAME**

(30) Priority: 13.12.2024 KR 20240185757
(71) Applicant: Hyundai Motor Company, Seoul 06797 (KR); Kia Corporation, Seoul 06797 (KR)
(72) Inventor: PARK, Se Young, 18280 Hwaseong-si, Gyeonggi-do (KR); CHOI, Ji Am, 18280 Hwaseong-si, Gyeonggi-do (KR); CHOI, Eun Young, 18280 Hwaseong-si, Gyeonggi-do (KR); KIM, Su Hyun, 18280 Hwaseong-si, Gyeonggi-do (KR)
(74) Representative: Isarpatent

(57) **Abstract**

An apparatus of a vehicle may comprise a processor and a memory storing at least one instruction that, when executed by the processor communicating with the memory, is configured to cause the apparatus to determine, via a sensor of the vehicle, whether grip conditions of a steering wheel of the vehicle are satisfied, wherein the grip conditions are related to an output of a notification for requesting grip of the steering wheel to a driver of the vehicle, and wherein the output of the notification is based on at least one of a vehicle state of the vehicle during autonomous driving of the vehicle or a driver state of the driver during the autonomous driving of the vehicle, output a signal indicating whether to generate or release the notification, and perform monitoring or adjusting.

## Description

### TECHNICAL FIELD

Various examples of the present disclosure relate to a method for more efficiently operating functions related to a steering wheel hands-on request (HOR) among controls in a vehicle system.

### BACKGROUND

The matters described in this Background section are only for enhancement of understanding of the background of the disclosure, and should not be taken as acknowledgment that they correspond to prior art already known to those skilled in the art.

In autonomous driving technology, a hands-on request (HOR) function for monitoring a driver's steering wheel grip state may be used to ensure safety. However, an HOR system may have a limitation in that the HOR system may not appropriately adjust grip conditions depending on a driving environment or vehicle state since the HOR system may simply determine a driver's grip state based on whether or not contact with the steering wheel occurs.

### SUMMARY

The present disclosure has been made to solve the aforementioned problems, and is directed to variably applying grip conditions of an HOR depending on a situation and state that may occur during operation of an autonomous driving system.

The problems to be solved by the present disclosure are not limited to the problems that are mentioned above, and other problems that have not been mentioned can be clearly understood by those skilled in the art from the description below.

According to the present disclosure, an apparatus of a vehicle, the apparatus may comprise, a processor, and a memory storing at least one instruction that, when executed by the processor communicating with the memory, is configured to cause the apparatus to, determine, via a sensor of the vehicle, whether grip conditions of a steering wheel of the vehicle are satisfied, wherein the grip conditions are related to an output of a notification for requesting grip of the steering wheel to a driver of the vehicle, and wherein the output of the notification is based on at least one of a vehicle state of the vehicle during autonomous driving of the vehicle or a driver state of the driver during the autonomous driving of the vehicle, based on the determination of whether the grip conditions are satisfied, output a signal indicating whether to generate the notification or whether to release a previously generated notification, and based on the signal, perform at least one of: monitoring a grip on the steering wheel or adjusting the autonomous driving of the vehicle.

The apparatus, wherein the at least one instruction, when executed by the processor communicating with the memory, is configured to cause the apparatus to output, via a user interface of the vehicle, content of the grip conditions, wherein the grip conditions are determined to be satisfied. The apparatus, wherein the at least one instruction, when executed by the processor communicating with the memory, is configured to cause the apparatus to output, via a user interface of the vehicle and based on activation of autonomous driving of the vehicle, information indicating that the grip conditions are variably set. The apparatus, wherein the at least one instruction, when executed by the processor communicating with the memory, is configured to cause the apparatus to, determine, based on the vehicle state or the driver state, a priority of the grip conditions, and set, based on the determined priority, the grip conditions.

The apparatus, wherein the grip conditions comprise at least one of, a number of grip areas required to be detected on the steering wheel, a location of the grip areas on the steering wheel, an area of contact on the steering wheel, a strength level of the grip on the steering wheel, or a time duration for which the grip areas are maintained on the steering wheel. The apparatus, wherein the vehicle state may comprise at least one of, an abnormal state in which a sensor of the vehicle malfunctions, a controller fails, or a hardware defect occurs, a system boundary state in which autonomous driving of the vehicle is limited due to environmental or system performance constraints, or a collision risk state indicating a risk of collision between the vehicle and an object. The apparatus, wherein the driver state may comprise at least one of, an inattention state in which the driver is determined to be inattentive, or an undetermined state in which the driver state is not determined due to a sensing failure or a monitoring constraint. The apparatus, wherein the at least one instruction, when executed by the processor communicating with the memory, is configured to cause the apparatus to determine, based on historical driving data of the driver, the grip conditions.

The apparatus, wherein the vehicle state may comprise a state in which sensor value input is not allowed due to a sensor of the vehicle being obscured. The apparatus, wherein the at least one instruction, when executed by the processor communicating with the memory, is configured to cause the apparatus to further determine, based on feedback data of the driver in response to the notification, the grip conditions. The apparatus, wherein the at least one instruction, when executed by the processor communicating with the memory, is configured to cause the apparatus to determine, based on a surrounding environmental state of the vehicle, the grip conditions. The apparatus, wherein the surrounding environmental state may comprise at least one of, a road state, a weather state, or a state of an object adjacent to the vehicle.

According to the present disclosure, a method performed by an apparatus of a vehicle, the method may comprise, determining, via a sensor of the vehicle, whether grip conditions of a steering wheel of the vehicle are satisfied, wherein the grip conditions are related to an output of a notification for requesting grip of the steering wheel to a driver of the vehicle, and wherein the output of the notification is based on at least one of a vehicle state of the vehicle during autonomous driving of the vehicle or a driver state of the driver during autonomous driving of the vehicle, and based on the determining of whether the grip conditions are satisfied, outputting a signal indicating whether to generate the notification or whether to release a previously generated notification, and based on the signal, performing at least one of: monitoring a grip on the steering wheel or adjusting the autonomous driving of the vehicle.

The method may further comprise outputting, via a user interface of the vehicle, content of the grip conditions, wherein the grip conditions are determined to be satisfied. The method may further comprise outputting, via a user interface of the vehicle and based on activation of autonomous driving of the vehicle, information indicating that the grip conditions are variably set. The method, wherein the determining of whether the grip conditions are satisfied may comprise, based on accumulated driving data of the driver prior to activation of the autonomous driving of the vehicle, determining whether the grip conditions are satisfied, and wherein the grip conditions comprise at least one of, a number of grip areas required to be detected on the steering wheel, a location of the grip areas on the steering wheel, an area of contact on the steering wheel, a strength level of the grip on the steering wheel, or a time duration for which the grip areas are maintained on the steering wheel. The method, wherein the determining of whether the grip conditions are satisfied may comprise, based on historical driving data of the driver, determining whether the grip conditions are satisfied.

According to the present disclosure, a vehicle may comprise, a sensor, a processor, and a memory storing at least one instruction that, when executed by the processor communicating with the memory, is configured to cause the vehicle to, obtain, via the sensor, during autonomous driving of the vehicle, state information may comprise at least one of a vehicle state of the vehicle or a driver state of a driver of the vehicle, identify, based on the state information, grip conditions to be satisfied by the driver when gripping a steering wheel of the vehicle, determine, via a sensor associated with the steering wheel, whether the driver satisfies the grip conditions, output, based on a determination that the grip conditions are not satisfied, a signal requesting grip of the steering wheel, and adjust autonomous driving control of the vehicle based on whether the grip conditions are satisfied in response to the signal. The vehicle, wherein the state information may comprise at least one of, accumulated driving data of the driver, feedback data of the driver for the signal, or a surrounding environmental state of the vehicle may comprise a road state, a weather state, or a state of an object adjacent to the vehicle.

The vehicle, wherein the adjusting of the autonomous driving control may comprise, restricting at least one autonomous driving function of the vehicle, or transitioning control of the vehicle from an autonomous driving mode to a manual driving mode based on the grip conditions remaining unsatisfied for a predetermined time after the output of the signal.

### BRIEF DESCRIPTION OF THE DRAWINGS

The above and other objects, features and advantages of the present disclosure will become more apparent to those of ordinary skill in the art by describing examples thereof in detail with reference to the accompanying drawings, in which:
FIG 1 shows an example of a vehicle according to an example;
FIG 2 shows an example of a control operation related to a steering wheel hands-on request (HOR) according to an example;
FIG 3 shows an example of a criterion for determining grip conditions for each situation according to an example;
FIG 4, FIG 5, FIG 6, FIG 7, FIG 8 show exemplary steering wheel grip states according to various examples; and
FIG 9 shows an example of a control operation related to the steering wheel HOR according to an example.
FIG 10 shows an example computing system (e.g., a computing device of a vehicle or any other apparatus).

### DETAILED DESCRIPTION

Hereinafter, preferred examples of the present disclosure will be described in detail with reference to the accompanying drawings.

However, the technical idea of the present disclosure is not limited to the few examples that will be described, but may be implemented in various different forms, and one or more of the components in the examples may be selectively combined or substituted and used within the scope of the technical idea of the present disclosure.

Further, terms (including technical and scientific terms) used in the examples of the present disclosure may be construed as having meanings that may be generally understood by those skilled in the art to which the present disclosure belongs, unless explicitly and specifically defined and described, and meanings of terms that are commonly used, such as terms defined in a dictionary, may be construed in consideration of contextual meaning of the related art.

Further, the terms used in the examples of the present disclosure are intended to describe the examples and are not intended to limit the present disclosure.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

Further, terms such as "first," "second," "A," "B," "(a)," and "(b)" may be used to describe components in the examples of the present disclosure.

These terms are only intended to distinguish the component from other components, and do not limit the nature, order, or sequence of the component.

When a component is described as being "connected," "coupled," or "joined" to another component, this may include not only a case where the component is directly connected, coupled, or joined to the other component, but also a case where the component is "connected," "coupled," or "joined" to the other component by still another component between the component and the other component.

Further, when one component is described as being formed or disposed "on or under" another component, the term "on or under" includes not only a case in which the two components are in direct contact with each other, but also a case in which one or more other components are formed or disposed between the two components. Further, when the term "on or under" is expressed, this may mean not only an upward direction but also a downward direction with respect to one component.

In various flowcharts of the present disclosure, at least some steps may be omitted or the order of the steps may be changed, and at least some of the various examples of the present disclosure may be performed at a specific point in time in each step of the flowchart. Operations in the various flowcharts of the present disclosure may be performed by at least one of a control device 100, a processor 130, and a vehicle 10. Further, overlapping content in the drawings of the present disclosure may be omitted.

"Autonomous driving system" or "driver control assistance system" mentioned in the present disclosure means hardware and software that can assist a driver in continuously controlling longitudinal and lateral movements of a vehicle. This driver control assistance system may be referred to as a "system" in the present disclosure.

"Feature" mentioned in the present disclosure may mean a function of a specific system that helps a driver in a defined traffic scenario, situation, and system boundary.

"Dynamic control" mentioned in the present disclosure may mean performing operational and tactical functions required to move a vehicle in real time. This may include control of lateral and longitudinal movements of the vehicle, monitoring of a road environment, coping with events in a road traffic environment, operation plans, signal transmission, and the like.

"System boundaries" mentioned in the present disclosure may mean verifiable or measurable limits or conditions set by a manufacturer, and may mean a condition that affects a system designed to help a driver, or functions of the system, and the ability of the system operating as intended, or settings within the range of the conditions.

Hereinafter, the examples will be described in detail with reference to the accompanying drawings, the same or corresponding components will be denoted by the same reference numbers throughout the drawings, and redundant description thereof will be omitted.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., feature of adaptively adjusting steering wheel grip requirements) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., feature of adaptively adjusting steering wheel grip requirements) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., feature of adaptively adjusting steering wheel grip requirements) described herein.

Minimum risk maneuver (MRM) operation(s) may also be controlled, for example, based on one or more features (e.g., feature of adaptively adjusting steering wheel grip requirements) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., feature of adaptively adjusting steering wheel grip requirements) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., feature of adaptively adjusting steering wheel grip requirements) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

An autonomous driving level and/or autonomous driving activation/deactivation may also be controlled, for example, based on one or more features (e.g., feature of adaptively adjusting steering wheel grip requirements) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents may not be displayed on a display of the vehicle.

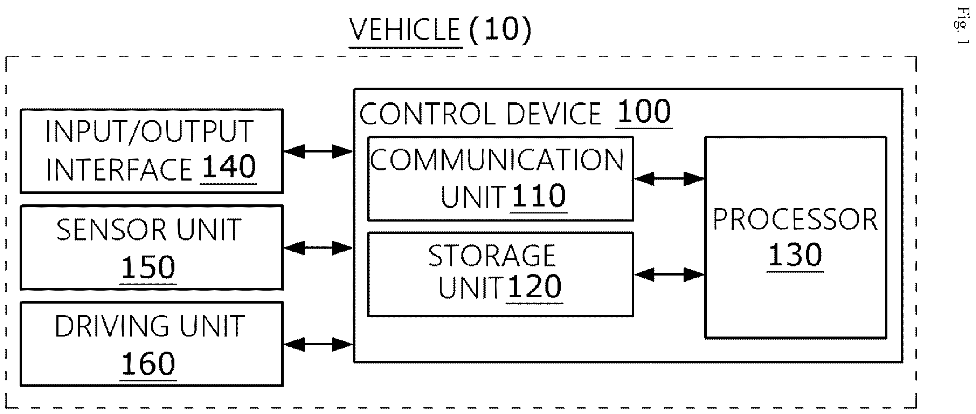

FIG 1 shows an example of the vehicle 10 according to an example.

The vehicle 10 may include the control device 100, a communication unit 110, a storage unit 120, the processor 130, an input/output interface 140, a sensor unit 150, and a driving unit 160. Each of the components of FIG. 1 may be implemented inside the vehicle.

The control device 100 may be formed integrally with internal components of the vehicle, may be implemented as an independent device separately from the other components inside the vehicle 10 and may perform communication with the internal components of the vehicle through various connection means (for example, a CAN bus, a wireless network, a LIN bus, and a wired connection). The control device 100 may include the communication unit 110, the storage unit 120, and the processor 130 to control the vehicle, and may further include other components such as the input/output interface 140, the sensor unit 150, and the driving unit 160 to perform a complex control function depending on a driving situation (e.g., lane departure, emergency braking, or system override, etc.).

The communication unit 110 may perform communication with other control devices inside the vehicle to share inter-system data or transmit or receive various types of information through a connection to the outside of the vehicle. The communication unit 110 may transmit control signals and data between the internal components using various in-vehicle communication schemes such as CAN communication and Ethernet, and may link driving information and external data in real time through communication with a user terminal, another vehicle (vehicle-to-vehicle (V2V)), infrastructure (vehicle-to-infrastructure (V2I)), or an external server (e.g., a traffic management system, a cloud-based navigation provider, or a fleet operator server, etc.).

The communication unit 110 may perform short-range communication, GPS signal reception, vehicle-to-everything (V2X) communication, optical communication, broadcast transmission and reception, and intelligent transport systems (ITS) communication functions, and may support stable data transmission in a short range using wireless communication technology such as Bluetooth, radio frequency identification (RFID), Infrared Data Association (IrDA), ultra wideband (UWB), ZigBee, near field communication (NFC), Wi-Fi, Wi-Fi Direct, and wireless USB. Further, the communication unit 110 may include a mobile communication module based on a mobile communication network (e.g., LTE, 5G, or 6G, etc.) and a wireless Internet module for access to wireless Internet to receive real-time data through long-range communication and improve the performance of an autonomous driving system in conjunction with a cloud (e.g., for map updates, over-the-air firmware updates, or remote diagnostics, etc.).

The storage unit 120 may include various types of memories capable of storing data, and may be integrated into the control device 100 or the processor 130 or configured in the form of a separate module. The storage unit 120 may include a nonvolatile memory (for example, a hard disk drive, a flash memory, an EEPROM, an SRAM, an FRAM, a PRAM, or an MRAM) and a volatile memory (for example, a DRAM, an SDRAM, or a DDR-SDRAM), which may be combined to implement memory systems with various capacities and performances (e.g., storing real-time sensor buffers, historical driving logs, or temporary route data, etc.).

According to an example, the storage unit 120 may be connected to the processor 130 to store and manage various types of data required for operation of the autonomous driving system. The storage unit 120 may store driving data of the vehicle 10, driver state information, grip condition setting values, system diagnosis information, and the like (e.g., tire pressure status, battery temperature, or brake wear metrics, etc.).

Specifically, the storage unit 120 may store reference data required for a grip condition setting in a predefined form. For example, the storage unit 120 may store data such as the number, location, area, strength, and maintenance time of grip areas, and a plurality of grip condition profiles that can be selected depending on a vehicle state and a driver state may be stored (e.g., drowsiness, high-speed cornering, or sensor fault detection, etc.).

Further, the storage unit 120 may accumulatively store a driver's past driving data so that the driving data can be utilized for driving habit analysis and grip condition setting. The accumulated driving data may include information such as a frequency of HOR notification occurrences, a grip release frequency, a warning ignore count, and a response time to a warning (e.g., how quickly the driver reacts to visual, auditory, or haptic prompts, etc.).

The storage unit 120 may store information such as a normal/abnormal state of a configuration (for example, the sensor unit) inside the vehicle 10, a system error log, and a boundary state of the autonomous driving system. Further, data related to a driving environment of the vehicle, such as a road state, a weather state, and nearby object information (e.g., road slipperiness, fog density, or pedestrian proximity, etc.), may be stored.

The processor 130 may perform communication with the communication unit 110, the storage unit 120, the input/output interface 140, the sensor unit 150, the driving unit 160, and various internal components of the vehicle 10 through electrical or operational connections, and may control an operation of each component and perform data processing. The processor 130 is a central processing unit for command execution and data calculation, and may collect, process, and analyze data in real time to perform vehicle control according to a current driving environment of the vehicle (e.g., urban, highway, tunnel, or construction zone, etc.).

The processor 130 may be implemented in the form of hardware, software, or a combination thereof, and may perform vehicle control logic in the form of, for example, a microcontroller, an FPGA, or an ASIC. Further, the processor 130 may include a multiprocessor configuration for controlling complex autonomous driving and a driver assistance system. Such a processor configuration may support comprehensive control and stable performance of the vehicle through autonomous driving and assistance system execution, sensor data processing, communication data management, and driving-related determination functions (e.g., triggering lane change, issuing take-over requests, or evaluating driver attentiveness, etc.).

The input/output interface 140 serves to receive input related to vehicle control from the user and transfer a vehicle control status and system operation information to the user.

The input/output interface 140 may perform a function of receiving various inputs from the user and transferring the vehicle control status to the user. The input/output interface 140 may include an input means and an output means.

The input means may include physical buttons, selection areas on a touch display, a voice recognition function, a gesture recognition function, and the like, and this allows the user to input commands, for example, to request activation of the autonomous driving system, switch between functions, or set driving assistance (e.g., enable lane centering, disable speed limiter, or increase following distance, etc.).

The output means includes a display, an audio module (for example, a speaker), a haptic module, and the like, and may provide the user with a status of the autonomous driving system, a control switching request notification, whether or not a function is activated, and the like in a visual, auditory, or tactile form (e.g., blinking icons, verbal instructions, or steering wheel vibrations, etc.).

For example, when the driver is not gripping the steering wheel or is not gripping the steering wheel under preset conditions in a situation in which a steering wheel hands-on request (HOR) is required, the control device 100 may display a warning message on a cluster or head-up display (HUD), play a warning sound through the speaker, and generate vibration on the steering wheel through the haptic module to induce immediate attention (e.g., with increasing vibration intensity if no action is taken, etc.).

According to an example, the input/output interface 140 may perform the role of delivering a state of the vehicle system and warning information to the driver and receiving input from the driver. The input/output interface 140 may include various output means such as a display screen, a speaker, and a haptic feedback device to provide visual, auditory, and tactile information to the driver. For example, when a warning of the steering wheel HOR is activated, the input/output interface 140 may display a warning message through the cluster or HUD, or deliver a voice warning through the speaker (e.g., "Please grip the steering wheel" or "Autonomous mode disengaging soon," etc.).

Further, the input/output interface 140 may receive input from the driver through a touch screen, a physical button such as a switch, a voice recognition system, or the like. This makes it possible for the driver to transmit a command to the vehicle system, for example, to activate an autonomous driving function, to change a warning setting, or to release a warning (e.g., by tapping a screen, confirming via voice, or pressing a dedicated override button, etc.).

Further, a state of the autonomous driving system may be intuitively confirmed through the HUD, the cluster, an audio video navigation (AVN), and a display built into a rearview mirror or a side mirror. In addition, the state of the autonomous driving system may be confirmed through a display of a console installed in each row of the vehicle 10, an application of a user terminal, or the like (e.g., a smartphone app, a tablet interface, or a smartwatch notification, etc.).

The sensor unit 150 may include a plurality of sensors that detect various types of driving and environmental information in real time to support stable operation of an autonomous driving system or a driver assistance system. The sensor unit 150 may measure a distance to and speed of a nearby object through long-range detection sensors such as radio detection and ranging (RADAR) and light detection and ranging (LiDAR), and may detect objects near the vehicle 10 by including an ultrasonic sensor (e.g., for parking assistance, blind spot monitoring, or low-speed obstacle detection, etc.).

The sensor unit 150 may include a camera. The camera can be classified into an external camera and an internal camera. The external camera may recognize a road and a surrounding environment, and the internal camera may detect a driver's state (for example, eye tracking or steering wheel grip state) or an interior situation (e.g., passenger posture, seatbelt status, or object left behind, etc.) to comprehensively ascertain situations inside and outside the vehicle. The sensor unit 150 may include a heart rate sensor, a pressure sensor, an infrared sensor, and the like to collect the driver's biometric information or various types of environmental data (e.g., cabin temperature, CO₂ levels, or light intensity, etc.).

According to an example, the sensor unit 150 may collect data necessary to satisfy steering wheel HOR conditions by monitoring the autonomous driving function of the vehicle and a driver's steering wheel grip state. For example, the sensor unit 150 may detect a hands-on state of the driver through a steering wheel detection sensor. The steering wheel detection sensor may include a capacitive, pressure, or optical sensor to detect whether or not there is contact with the steering wheel, strength of the contact, and a location of the contact (e.g., left/right hand placement, contact area size, or front/back surface contact, etc.). This makes it possible to determine in real time whether or not the driver is appropriately gripping the steering wheel.

Further, the sensor unit 150 may analyze a driver's face direction, eye tracking, head motion, and the like through an internal camera to evaluate the driver's attention state. For example, whether the driver's gaze is fixed forward or diverted to the side or downward may be detected for detection of the driver's inattention state (e.g., looking at a mobile device, dozing off, or turning to speak with a passenger, etc.).

The driving unit 160 may include various components that provide drive power required for driving of the vehicle 10 and control the operation of the vehicle according to a command output from the control device 100. The driving unit 160 may be configured of devices that generate and transfer power for the vehicle, such as an engine, a motor, a transmission, and a wheel drive system, and a controller that controls the devices, and acceleration, deceleration, and direction change of the vehicle 10 may be performed through such components (e.g., electronic throttle control or regenerative braking, etc.).

The driving unit 160 is controlled to maintain driving safety by performing longitudinal control (acceleration and deceleration) and lateral control (lane maintenance and change) of the vehicle. For example, the driving unit 160 receives a command from the control device 100 and adjusts an output of the motor or a rotation speed and direction of wheels so that the vehicle can follow the driving route (e.g., in adaptive cruise control, autonomous lane change, or evasive maneuvers, etc.).

Further, the driving unit 160 may include a brake system to reduce a speed of the vehicle or stop the vehicle during driving. The driving unit 160 may control the vehicle 10 based on control through an electric motor in the case of an electric vehicle or based on an engine output in the case of an internal combustion engine vehicle (e.g., by controlling an inverter in an EV or adjusting throttle and fuel injection in an ICE vehicle, etc.).

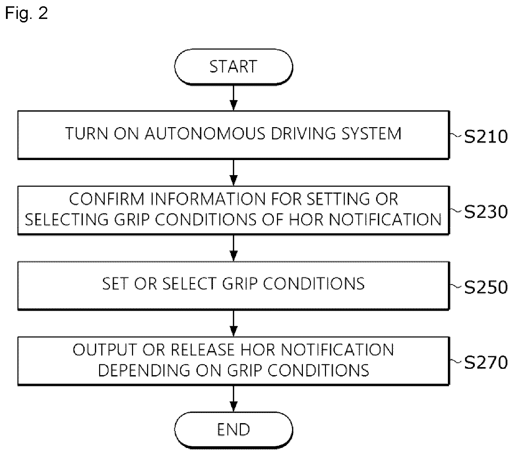

FIG 2 is a flowchart showing a control operation related to a steering wheel hands-on request (HOR) according to an example.

The control device 100 may turn on an autonomous driving function of the vehicle 10 (S210).

Specifically, the control device 100 may be configured to activate the autonomous driving system of the vehicle and perform functions related to vehicle control (for example, longitudinal such as acceleration or braking, or lateral control such as lane keeping or lane changing, etc.) during driving. This autonomous driving system may be activated through the input/output interface 140 or automatically executed according to preset control (e.g., driver preference settings, navigation-based triggers, or geofencing rules, etc.).

The control device 100 may confirm information for setting grip conditions of the HOR notification (S230).

According to an example, the grip conditions are criteria for determining a steering wheel hands-on state of the driver, and may include at least one of the number, location, area, strength, and maintenance time of the grip areas required to be detected on the steering wheel (e.g., gripping both sides simultaneously, maintaining grip for 3 seconds, or applying a minimum contact force, etc.).

The control device 100 may set the grip conditions based on the vehicle state, the driver state, and various other types of information or confirm specific grip conditions among a plurality of preset grip conditions, and apply the grip conditions to the control of the HOR notification.

The control device 100 may confirm the vehicle state to set or confirm the grip conditions. For example, the control device 100 may confirm a malfunction state of the vehicle 10, a system boundary state, a collision risk state between the vehicle and a nearby object, or the like (e.g., sensor malfunction, poor GPS signal, or sudden lane merging by another vehicle, etc.).

Further, the control device 100 may monitor the driver state to determine whether the driver is attentive, whether the driver is inattentive, or whether the driver state cannot be determined.

For example, the control device 100 may determine whether the driver is inattentive based on the driver's gaze, a frequency of use of a brake and an accelerator pedal, and the like through a sensor unit including a camera, a steering wheel sensor, a biometric sensor, and the like (e.g., gaze tracking showing downward focus, long idle time on pedals, or heart rate variation, etc.).

Further, the control device 100 may determine that the driver state cannot be determined when a user state cannot be monitored, for example, due to an error in the camera or sensor (e.g., lens obstruction, fogging, or signal dropout, etc.).

Further, the control device 100 may additionally confirm at least one of accumulated driving data of the driver before autonomous driving activation, driving data of the driver after autonomous driving activation, feedback data of the driver for the HOR notification, and a surrounding environment state of the vehicle, in addition to the vehicle state and driver state as described above (e.g., road curvature, heavy rain, or nearby pedestrian detection, etc.).

Next, the control device 100 may set or confirm the grip conditions based on the confirmed information (S250).

According to an example, the control device 100 may set or confirm the grip conditions based on at least one of the vehicle state and the driver state.

In relation to the vehicle state, the control device 100 may set or confirm the grip conditions based on at least one of the malfunction state of the vehicle, the system boundary state, a state in which sensor values cannot be input due to a sensor being covered, and the collision risk state (e.g., LiDAR blocked by snow, radar impaired by dirt, or proximity alerts to moving obstacles, etc.). For example, when the system boundary state of the vehicle is detected or the collision risk state occurs, the control device 100 may set or select strengthened grip conditions (e.g., requiring two-hand grip, increased contact area, or shorter reaction time, etc.).

The malfunction state of the vehicle may include, for example, a sensor malfunction, a controller error, or a vehicle hardware defect. Specifically, the malfunction state of the vehicle may be a state in which a sensor inside the vehicle does not collect data normally or a controller (such as an ECU) does not perform command processing, or a state in which a vehicle hardware defect such as a steering device malfunction occurs (e.g., failure in the electric power steering module, throttle actuator anomaly, or broken wheel speed sensor, etc.).

The system boundary state of the vehicle may include, for example, a change in driving environment and a limit of system performance. Specifically, the system boundary state of the vehicle may include a case in which the autonomous driving system of the vehicle does not recognize an appropriate route due to, for example, a complex traffic situation exceeding the limits of its detection and determination capabilities or sudden occurrence of a construction section (e.g., missing or confusing road markings, temporary detours, or multiple merging lanes, etc.). Further, the system boundary state of the vehicle may also include a state in which driving control is not possible in a specific situation due to the limits of a sensor range and computational performance of the vehicle system (e.g., failure to detect narrow alleyways, high-speed decision-making limitations, or dense pedestrian crosswalks, etc.).

Further, the vehicle state may further include a state in which sensor value input is not possible due to a sensor of the vehicle 10 being covered. For example, the vehicle state may include a state in which a driving situation of the vehicle cannot be accurately determined because sensor values are not input when a radar sensor of the vehicle is covered by snow, dirt, dust, or foreign substances (e.g., mud splatter, leaves, or rain droplets, etc.).

In relation to the driver state, the control device 100 may confirm a driver attention state, inattention state, or inability to determine the driver state, and set or confirm the grip conditions based on such a state. For example, if the driver is determined to be in the inattention state, the control device 100 may strengthen the grip conditions by increasing the grip strength of the steering wheel or increasing the number of grip areas (e.g., requiring both hands on upper portions, tighter contact force, or longer grip duration, etc.). On the other hand, if the driver is determined to be in the attention state or shows a quick and consistent response to the HOR notification, the control device 100 may ease the grip conditions (e.g., allow one-hand grip, reduce area requirements, or shorten response time, etc.).

The control device 100 may set or confirm the grip conditions by determining a priority based on at least one of the vehicle state and the driver state described above.

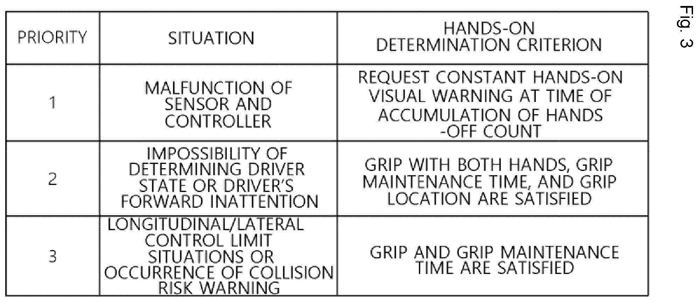

FIG 3 is an illustrative diagram illustrating a criterion for determining grip conditions for each situation according to an example.

Referring to FIG 3, the vehicle state and the driver state may occur alone or may be combined and classified into a specific situation. The vehicle state may include sensor malfunction, controller malfunction, longitudinal/lateral control limit situations (system boundaries), a collision risk warning occurrence state, and the like, and the driver state may include impossibility of determining the driver state, a driver's forward inattention, and the like (e.g., nodding off, looking away from the road, or wearing obstructive sunglasses, etc.). The states have priorities that are assigned depending on the severity of the situation, and appropriate grip conditions may be set or confirmed accordingly.

The control device 100 may confirm priorities of the grip conditions based on the vehicle state or the driver state, and confirm the grip conditions corresponding to the confirmed priorities.

For example, a state in which a sensor or controller malfunctions has the highest priority, and in this case, the grip conditions may be set or confirmed based on the highest criterion. Specifically, the driver is required to maintain a hands-on state at all times and to satisfy the grip of both hands on the steering wheel and a certain strength and maintenance time (e.g., at least 3 seconds with firm pressure above a threshold, etc.). Further, if the driver maintains a hands-off state for a certain period of time, the control device 100 may request immediate intervention from the driver through a visual warning (for example, a warning message) and an auditory warning (for example, a warning sound) (e.g., flashing red icon on the HUD and repeating chime tone, etc.).

Meanwhile, the control device 100 may set or confirm the grip conditions further based on at least one of the accumulated driving data of the driver before autonomous driving activation, driving data of the driver after autonomous driving activation, the feedback data of the driver for the HOR notification, and a surrounding environmental state (e.g., foggy conditions, heavy traffic density, or frequent lane changes, etc.) of the vehicle, in addition to the vehicle state and driver state as described above.

Specifically, the control device 100 may change the grip conditions in consideration of driving habits of the driver. To this end, the control device 100 may confirm and analyze the accumulated driving data of the driver recorded before the autonomous driving function is activated.

The accumulated driving data of the driver may include, for example, how the driver responds to the HOR notification, a frequency of warning occurrence, a response time, and the number of times the warning is ignored (e.g., average grip delay of 5 seconds, ignoring 3 out of 5 warnings, or consistently releasing grip after activation, etc.). For example, if information indicating that the driver responds slowly to the HOR notification in a previous driving record, the HOR notification occurs a certain number of times or more within a certain period, or the driver repeatedly ignores the HOR notification is confirmed, the control device 100 may strengthen the grip conditions based on this accumulated driving data or confirm (for example, select) specific grip conditions among a plurality of grip conditions (e.g., increase minimum grip area, require two-hand detection, or enforce longer grip time, etc.).

Further, the control device 100 may analyze not only the driving habits of the driver but also data collected in real time during current driving. For example, when the driver tends to frequently maintain the hands-off state after the autonomous driving function is activated, the control device 100 may strengthen the grip conditions based on the real-time data (e.g., trigger more frequent HOR notifications, require stronger grip force, or reduce warning response time threshold, etc.). On the other hand, if it is confirmed that the driver tends to respond quickly to the warning and maintain an appropriate hands-on state, the control device 100 may ease the grip conditions (e.g., allow one-hand grip or reduce grip duration requirement, etc.).

Further, the control device 100 may change the grip conditions based on the feedback data of the driver for the HOR notification. For example, the control device 100 may confirm a time it takes for the driver to respond to the warning after the HOR notification occurs, the number of times the driver ignores the warning, or a manner in which the driver responds to the warning (e.g., a manner in which the driver grips the steering wheel, such as quick firm grip at both sides, delayed single-hand grip, or temporary touch with insufficient force, etc.). The control device 100 may utilize this feedback data to determine the driver's warning response pattern and adjust the grip conditions.

For example, if the driver grips the steering wheel after a predetermined time after the HOR notification or does not grip the steering wheel, the control device 100 may strengthen the grip conditions. In this case, in order to release the previously output HOR notification, the control device 100 may increase the number of grip areas required to be detected on the steering wheel or add a criterion for increasing the grip strength (e.g., require both hands in specific upper zones with measurable pressure above a threshold, etc.).

On the other hand, if a pattern in which the driver responds quickly and appropriately to the previously output HOR notification is confirmed, the control device 100 may ease the grip conditions. For example, if the driver grips the steering wheel in a more enhanced manner within a predetermined time after the HOR notification, the control device 100 may determine whether or not to release the previously output HOR notification by changing the grip conditions based on such a grip (e.g., adjust required contact time from 3 seconds to 1.5 seconds or reduce minimum contact force, etc.).

Further, the control device 100 may change the grip conditions based on the surrounding environmental state of the vehicle. Specifically, the control device 100 may collect and analyze surrounding environmental data such as a road state, a weather state, and a state of an object adjacent to the vehicle in real time to set or confirm grip conditions appropriate for the situation (e.g., rain-slick roads requiring firmer grip, narrow urban alleys requiring both hands, or clear highways allowing relaxed grip conditions, etc.).

For example, if the stability of driving of the vehicle is highly likely to deteriorate due to a bumpy road or an unpaved road, the control device 100 may request the driver to grip the steering wheel more stably. To this end, the grip area may be increased, grip with both hands may be set as a prerequisite, or specific grip conditions may be selected from among preset grip conditions (e.g., requiring full palm coverage, symmetrical hand positioning, or continuous grip over 5 seconds, etc.). On the other hand, in a highway environment in which a road is flat and stable, the grip conditions may be eased so that the conditions are satisfied with only one-hand grip or contact for a relatively short period of time (e.g., light touch lasting 1-2 seconds or contact at any one side of the steering wheel, etc.).

In another example, when an object such as a pedestrian, a bicycle, or another nearby vehicle is detected near the vehicle, the risk of collision with the vehicle 10 may increase. In this case, the control device 100 may request the driver to grip a specific area (for example, an upper portion of the steering wheel) with both hands for a certain period of time or may strengthen the grip conditions by increasing the grip strength (e.g., requiring firm pressure above a calibrated threshold for 3 seconds or simultaneous contact with opposing quadrants, etc.). On the other hand, in a situation in which there are no nearby objects or hazards, the control device 100 may minimize the grip conditions, set the grip conditions so that the grip conditions are satisfied with only short contact, or select specific grip conditions (e.g., permit brief tap-based contact or allow minimal force touch in any zone, etc.).

According to an example, the grip conditions may include a setting for at least one of the number, location, area, strength, and maintenance time of the grip areas required to be detected on the steering wheel (e.g., both hands near 9 and 3 o'clock positions, force above 0.5 N, or contact duration of 2-5 seconds, etc.).

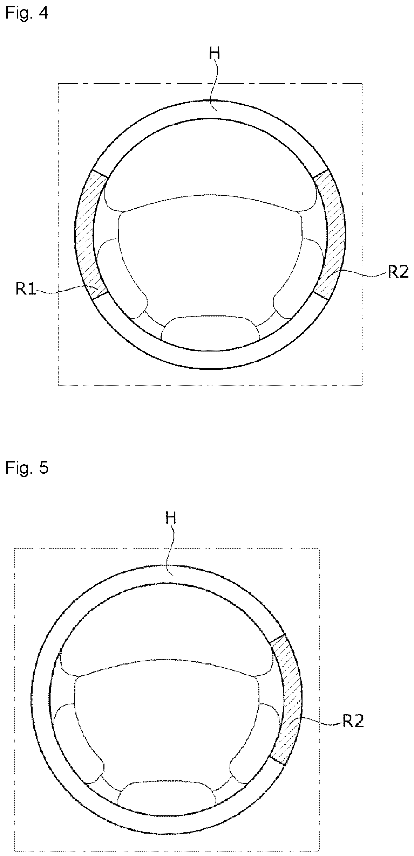

For example, FIGS. 4 to 8 illustrate steering wheel grip states according to various examples.

In FIG 4, a state in which grip of the steering wheel H is detected in two distinct areas R1 and R2 is illustrated. This may be a case in which the hands are detected in the respective areas R1 and R2 in a state in which the driver grips the steering wheel H with both hands. This state may be a general grip state, and may be a more advanced grip condition compared to grip states in FIGS. 4 to 7, which will be described next (e.g., ensures immediate driver control with full coverage in case of emergency, etc.).

FIG 5 illustrates a state in which only one area R2 of the steering wheel H is gripped. This may be a state in which the driver grips the steering wheel H with only one hand, and in this case, the control device 100 may require additional grip requirements (for example, the strength and the maintenance time) depending on the vehicle state, the driver state, and the like. For example, the control device 100 may change the grip conditions to grip with both hands instead of a one hand grip state as in FIG 4 in consideration of a current vehicle state or driver state (e.g., when in a high-speed zone, during poor visibility, or if the driver is detected as drowsy, etc.).

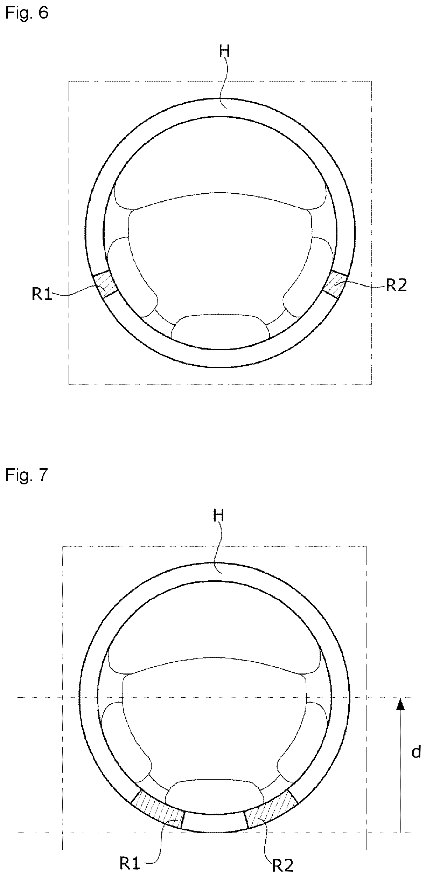

FIG 6 illustrates a state in which grip is detected in two distinct areas R1 and R2 of the steering wheel H, but the grip area is smaller than that in FIG 3. This may be a state in which the driver grips the steering wheel with only some of the driver's fingers (e.g., fingertips only, edge pinching, or loose grasp, etc.). The control device 100 may change the grip conditions to require the grip area greater than or equal to a minimum value, or select grip conditions requiring higher strength in consideration of the vehicle state or driver state (e.g., if grip is weak or inconsistent, or during sharp turns or dense traffic, etc.).

FIG 7 illustrates a state in which the grip locations R1 and R2 are detected only at a specific lower portion of the steering wheel H. This may be a case in which the driver grips the steering wheel with his or her arm hanging down. In such a state, it may be difficult for the driver to respond immediately at the time of occurrence of an emergency situation, and therefore the control device 100 may change the grip conditions so that the upper portion or a specific location of the steering wheel is detected as the grip location, if necessary (e.g., requiring contact at or above the horizontal diameter of the wheel, or within zones R3 and R4 near the 10 and 2 o'clock positions, etc.).

For example, the control device 100 may perform a setting so that an area above a radius d of the steering wheel H from the lower portion of the steering wheel H is gripped. Specifically, the control device 100 may set a criterion so that the upper portion area of the steering wheel H is set as the grip area, and in this case, the upper portion area may include a range covering 50% or more of the radius d from a central axis of the steering wheel H (e.g., between the 9 o'clock and 3 o'clock positions or zones R3 and R4 in upper quadrants, etc.). This makes it possible for the control device 100 to induce the driver to grip the upper portion of the steering wheel H in a dangerous situation, thereby increasing a likelihood of immediate intervention for emergency control (e.g., during obstacle avoidance or sudden braking scenarios, etc.).

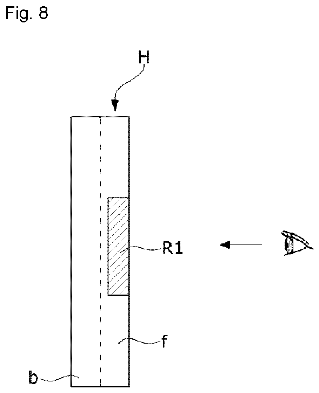

FIG 8 illustrates a state in which there is contact with only a front surface f of the steering wheel H.

According to an example, the steering wheel H may include respective detection sensors on the front surface f and a back surface b. A state as in FIG 7 may be a state in which the user lightly touches a front surface portion with his or her hands without actually gripping the steering wheel (e.g., resting fingertips on the front or brushing against it without applying force, etc.). In this case, the control device 100 may additionally request the grip strength or location condition together with the detection sensor on the back surface b of the steering wheel by changing the grip conditions in consideration of the vehicle state or the driver state (e.g., during high-risk zones, inattentive posture, or poor weather visibility, etc.).

A grip condition for adaptively requiring various grip states such as those illustrated in FIG 4, FIG 5, FIG 6, FIG 7, and FIG 8 may be set. The grip strength and the grip maintenance time may be considered as the grip conditions, in addition to the grip states illustrated in FIG 4, FIG 5, FIG 6, FIG 7, FIG 8 (e.g., detect force ≥ 0.7 N for ≥ 2 seconds, or continuous full-palm contact, etc.). For example, the grip conditions may be changed so that the grip strength of the steering wheel is not detected at a certain level or higher or the grip lasts for a preset time or longer.

Referring back to FIG 2, the control device 100 may determine whether or not to output the HOR notification and whether or not to release the HOR notification that has already been output depending on the grip conditions (S250). The control device 100 may monitor the hands-on state of the driver in real time to determine whether or not the set grip conditions are satisfied, and control the HOR notification according to a result of the determination (e.g., continue displaying a warning if grip is weak or release the alert if strong bilateral contact is detected, etc.).

If the grip conditions are satisfied, the control device 100 may regard the HOR notification as not being required, and may not output the notification or may release the HOR notification that has already been output. For example, if a state in which the driver grips the steering wheel with both hands for a certain period of time or with a specific strength depending on the set grip conditions is detected, the control device 100 may end the notification and control the vehicle 10 so that the vehicle 10 returns to a normal autonomous driving mode (e.g., lane-keeping and adaptive cruise control resume smoothly, etc.). Further, the control device 100 may perform a setting so that a new HOR notification does not occur while a state in which the grip conditions are satisfied is maintained (e.g., prevent repetitive alerts during consistent compliance, etc.).

On the other hand, if the grip conditions are not satisfied, the control device 100 may output an HOR notification for requesting the driver to perform a hands-on operation. The HOR notification may be output through a visual warning (for example, a warning display on a dashboard), an auditory warning (for example, a warning sound), or a tactile warning (for example, a steering wheel vibration) to induce the driver to satisfy the grip conditions (e.g., flashing red symbol with chime and escalating vibration intensity, etc.). If the driver fails to satisfy the grip conditions within a certain period of time, the control device 100 may control the vehicle 10 by increasing an HOR notification strength or limiting a part of the autonomous driving function (e.g., disabling lane change assist, gradually slowing the vehicle, or escalating to manual override mode, etc.).

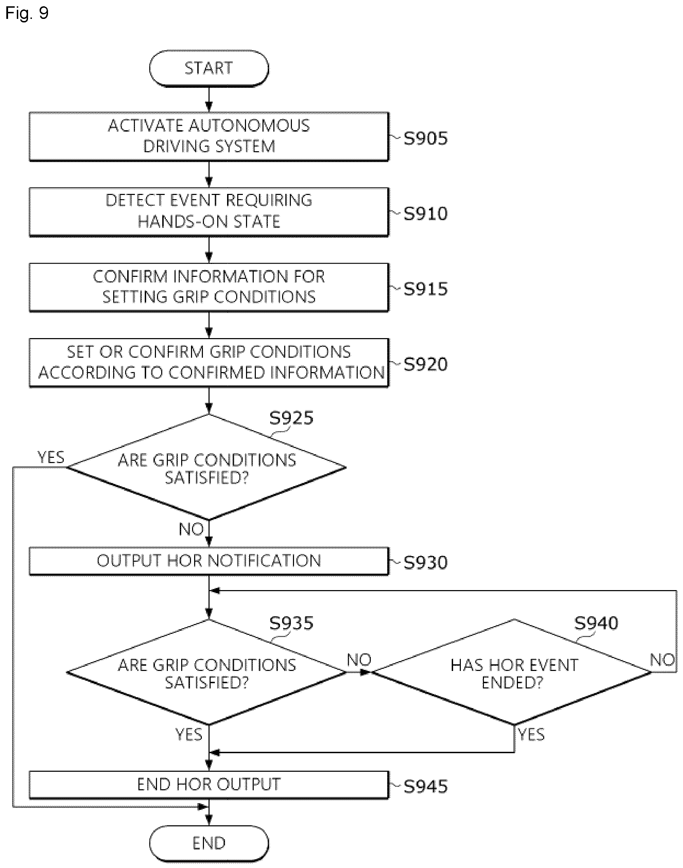

FIG 9 shows an example of a control operation related to a steering wheel HOR according to an example. Content of FIG 9 overlapping that of FIG 2 may be omitted.

The control device 100 may activate the autonomous driving system of the vehicle 10 (S905).

According to an example, if driving control in the vehicle system is activated, the control device 100 may output information indicating that the grip conditions may be variably set in the future depending on the driver state or vehicle state, in advance through the input/output interface 140. This information is intended to support the driver so that the driver can recognize and prepare for a likelihood of a change in grip conditions during the operation of the autonomous driving system in advance (e.g., transitions into urban zones, adverse weather, or complex intersections, etc.).

For example, the control device 100 may notify the driver of a message such as "Currently, basic steering wheel grip conditions are applied, but stricter conditions may be introduced depending on the vehicle state or driver state" through a display or the like when the autonomous driving mode starts. This information enables the driver to understand operation characteristics and potential changes of the autonomous driving system in advance (e.g., preparing to intervene earlier if notified of upcoming difficult road sections, etc.).

The control device 100 may detect an event requiring the hands-on state of the driver while the autonomous driving function is in operation (S910).

For example, if the vehicle 10 approaches a limit situation (system boundary) of the autonomous driving system or a sensor or controller failure in the vehicle is detected, the control device 100 may recognize this situation as the event requiring the driver's hands-on operation (e.g., construction zones, camera blinding, or controller overheating, etc.).

The control device 100 may confirm the information for setting the grip conditions of the steering wheel (S915), and set the grip conditions in real time or select one of the plurality of preset grip conditions according to the confirmed information (S920).

Specifically, the control device 100 may collect and analyze the vehicle state, the driver state, and various other types of data in real time to confirm information required for setting of the grip conditions and determine appropriate grip conditions based on the information or select preset grip conditions according to a specific situation (e.g., increase grip strength and duration during low-visibility conditions, etc.).

For example, the control device 100 may analyze the vehicle state to detect an event such as the system boundary state, sensor or controller failure, and occurrence of a collision risk warning. If such a situation occurs, the control device 100 may strengthen the grip conditions based on the real-time data or select preset strengthened conditions (e.g., grip with both hands, increased strength, and extended maintenance time, etc.), and apply the condition when determining whether to output the HOR notification or release the notification.

According to an example, the control device 100 may output content of the set or confirmed grip conditions to the driver through the input/output interface 140. This output is intended for the driver to more easily understand requirements related to the hands-on state required during the operation of the autonomous driving system.

The information output through the input/output interface 140 may be provided in a visual, auditory, or tactile form. For example, the grip conditions currently being applied may be visually displayed through a display device. The display may output specific requirements such as "Keep gripping with both hands in the current section" or "Grip the upper portion of the steering wheel" in text or graphics (e.g., with color-coded icons or progress bars indicating time remaining, etc.).

Further, the conditions related to the hands-on state may be delivered through voice guidance using an auditory output. For example, a voice message such as "Please grip the steering wheel with both hands because the current road state is unstable" may be output (e.g., repeated every few seconds until compliance is detected, etc.).

Further, tactile output may also be utilized. For example, vibration may be generated on the steering wheel to deliver a warning related to the hands-on state or to inform the driver that a specific condition is being applied (e.g., escalating from a light pulse to a strong buzz if ignored, etc.).

Next, the control device 100 may determine whether or not the set or confirmed (selected) grip conditions are satisfied (S925). The control device 100 may monitor the grip state of the steering wheel in real time and compare the grip state with the set or confirmed condition to evaluate whether or not the hands-on state of the driver is appropriate.

If the grip conditions are satisfied (S925: Yes), the control device 100 may end the operation in FIG 9 without additional measures. For example, when the driver stably grips the steering wheel with both hands for a certain period of time or grips the steering wheel at a required location and with a required strength depending on the set grip conditions, the control device 100 regards this as a normal state and does not generate the HOR notification (e.g., system remains in fully autonomous mode with minimal or no alerts, etc.).

On the other hand, if the grip conditions are not satisfied (S925: No), the control device 100 may determine that the hands-on state of the driver is insufficient and output the HOR notification (S930).

For example, the control device 100 may output a warning message on the display, generate a warning sound, or generate vibration on the steering wheel to provide a tactile warning (e.g., combination of HUD flashing icon, repeated chime, and steering wheel vibration, etc.).

Next, the control device 100 may confirm again whether or not the grip conditions are satisfied after the HOR notification is output (S935). This step is intended to evaluate whether or not the driver has appropriately responded to the HOR notification and maintained the hands-on state.

The control device 100 may monitor the grip state in real time through a sensor mounted on the steering wheel and determine whether or not the grip conditions are satisfied based on the grip conditions set or confirmed (selected) in the previous step. For example, after the HOR notification is output, the control device 100 may confirm in real time whether the grip strength, location, area, and maintenance time required according to existing grip conditions are detected (e.g., 0.7 N pressure at both sides of the wheel for at least 3 seconds, etc.).

If the grip conditions are still not satisfied (S935: No), the control device 100 may additionally confirm whether the HOR event has ended (S940).

If the HOR event has not ended (S940: No), the control device 100 may induce driver intervention by continuing to maintain the HOR notification requesting the hands-on state or gradually increasing the warning strength. For example, the control device 100 may request the driver to perform a hands-on operation by repeatedly or gradually increasing the strength using a method such as a visual warning (display message), an auditory warning (warning sound), or a tactile warning (steering wheel vibration) (e.g., stronger sound pattern, persistent display icon, and increased vibration intensity over time, etc.).

Further, if a state in which the HOR event has not ended continues for a certain period of time or longer, the control device 100 may restrict specific functions of the autonomous driving system. For example, a vehicle speed may be gradually reduced or a warning may be output to induce switching from the autonomous driving mode to a manual mode (e.g., slowing to a crawl in emergency lanes, or displaying a forced-takeover countdown, etc.).

On the other hand, if a determination is made that the grip conditions are satisfied after the HOR notification is output (S935: Yes), the control device 100 may determine that the driver has appropriately responded to the notification and end the HOR notification or stop an additional warning (S945). In this case, the system may return to the normal autonomous driving mode and maintain a current driving state without an additional hands-on request to the driver (e.g., restore autonomous steering and acceleration after confirming driver readiness, etc.).

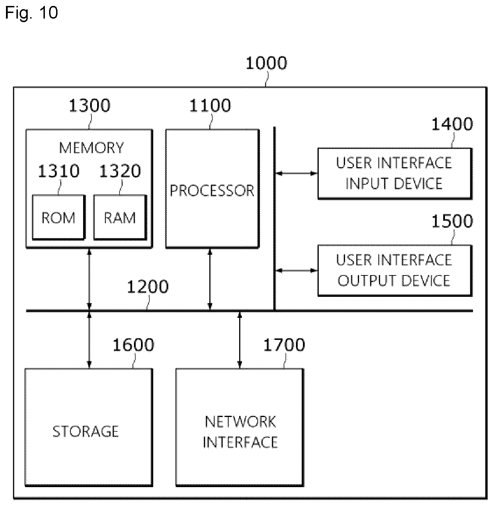

FIG 10 shows an example computing system (e.g., a computing device of a vehicle or any other apparatus). One or more controllers, processors, etc. described herein, such as one or more components of the vehicle 10 or any other components and devices disclosed herein, may be implemented by or in the computing system as shown in FIG 10.

A computing system 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example embodiment(s) disclosed in the specification may be directly implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

According to an example of the present disclosure, there is a provided a control device including a memory, and a processor electrically or adaptively connected to the memory, wherein the processor is configured to confirm grip conditions of a steering wheel related to a notification output based on at least one of a vehicle state and a driver state during driving control in a vehicle system, and determine whether or not to output the notification or whether or not to release a previously output notification based on confirmed content, and the notification is a notification for requesting grip of the steering wheel according to the driving control in the vehicle system.

In the control device according to some examples, the processor may be configured to output the confirmed content of the grip conditions through an input/output interface of the vehicle.

In the control device according to some examples, the processor may be configured to output information indicating that the grip conditions are variably set, through an input/output interface of the vehicle when the driving control in the vehicle system is activated.

In the control device according to some examples, the processor may be configured to confirm a priority of the grip conditions based on the vehicle state or the driver state and confirm the grip conditions corresponding to the confirmed priority.

In the control device according to some examples, the grip conditions may include at least one of the number, location, area, strength, and maintenance time of the grip areas required to be detected on the steering wheel.

In the control device according to some examples, the vehicle state may include at least one of an abnormal state of the vehicle, a system boundary state of the driving control in the system, and a collision risk state of the vehicle.

In the control device according to some examples, the driver state may include at least one of an inattention state of the driver, and a state in which the driver state is not determined.

In the control device according to some examples, the processor may be configured to confirm the grip conditions further based on driving data of the driver.

In the control device according to some examples, the vehicle state may include a state in which sensor value input is not allowed due to a sensor of the vehicle being covered.

In the control device according to some examples, the processor may be configured to confirm the grip conditions further based on feedback data of the driver for the notification.

In the control device according to some examples, the processor may be configured to confirm the grip conditions further based on a surrounding environmental state of the vehicle.

In the control device according to some examples, the surrounding environmental state may include at least one of a road state, a weather state, and a state of an object adjacent to the vehicle.

According to another example of the present disclosure, there is a provided a method for controlling a vehicle, including confirming grip conditions of a steering wheel related to a notification output based on at least one of a vehicle state and a driver state during driving control in a vehicle system, and determining whether or not to output the notification or whether or not to release a previously output notification based on confirmed content, wherein the notification is a notification for requesting grip of the steering wheel according to the driving control in the vehicle system.

The method according to some examples may further include outputting the confirmed content of the grip conditions through an input/output interface of the vehicle.

The method according to some examples may further include outputting information indicating that the grip conditions are variably set, through an input/output interface of the vehicle when the driving control in the vehicle system is activated.

In the method according to some examples, the confirming of the grip conditions of the steering wheel may include confirming the grip conditions further based on accumulated driving data of the driver prior to activation of the driving control in the system.

In the method according to some examples, the confirming of the grip conditions of the steering wheel may include confirming the grip conditions further based on driving data of the driver.

In the method according to some examples, the confirming of the grip conditions of the steering wheel may include confirming the grip conditions further based on a surrounding environmental state of the vehicle.

In the method according to some examples, the surrounding environmental state may include at least one of a road state, a weather state, and a state of an object adjacent to the vehicle.

According to examples of the present disclosure, it is possible to more effectively manage the driver's grip conditions for the HOR notification by dynamically setting the grip conditions of the steering wheel or selecting an appropriate condition among the preset grip conditions depending on the vehicle state and the driver state during driving.

The effects of the present disclosure are not limited to the effect mentioned above, and other effects that have not been mentioned can be clearly understood by those skilled in the art from the description below.

Although the present disclosure has been described above with reference to preferred examples of the present disclosure, it will be understood by those skilled in the art that various modifications and changes can be made to the present disclosure without departing from the spirit and scope of the present disclosure set forth in the following claims.

## Claims

1. An apparatus of a vehicle, the apparatus comprising:
a processor; and
a memory storing at least one instruction that, when executed by the processor communicating with the memory, is configured to cause the apparatus to:
determine, via a sensor of the vehicle, whether grip conditions of a steering wheel of the vehicle are satisfied, wherein the grip conditions are related to an output of a notification for requesting grip of the steering wheel to a driver of the vehicle, and wherein the output of the notification is based on at least one of a vehicle state of the vehicle during autonomous driving of the vehicle or a driver state of the driver during the autonomous driving of the vehicle,
based on the determination of whether the grip conditions are satisfied, output a signal indicating whether to generate the notification or whether to release a previously generated notification, and
based on the signal, perform at least one of: monitoring a grip on the steering wheel or adjusting the autonomous driving of the vehicle.

2. The apparatus of claim 1, wherein the at least one instruction, when executed by the processor communicating with the memory, is configured to cause the apparatus to output, via a user interface of the vehicle, content of the grip conditions, wherein the grip conditions are determined to be satisfied.

3. The apparatus of claim 1, wherein the at least one instruction, when executed by the processor communicating with the memory, is configured to cause the apparatus to output, via a user interface of the vehicle and based on activation of autonomous driving of the vehicle, information indicating that the grip conditions are variably set.

4. The apparatus of claim 1, wherein the at least one instruction, when executed by the processor communicating with the memory, is configured to cause the apparatus to:
determine, based on the vehicle state or the driver state, a priority of the grip conditions, and
set, based on the determined priority, the grip conditions.

5. The apparatus of claim 1, wherein the grip conditions comprise at least one of:
a number of grip areas required to be detected on the steering wheel,
a location of the grip areas on the steering wheel,
an area of contact on the steering wheel,
a strength level of the grip on the steering wheel, or
a time duration for which the grip areas are maintained on the steering wheel.

6. The apparatus of claim 1, wherein the vehicle state comprises at least one of:
an abnormal state in which a sensor of the vehicle malfunctions, a controller fails, or a hardware defect occurs,
a system boundary state in which autonomous driving of the vehicle is limited due to environmental or system performance constraints, or
a collision risk state indicating a risk of collision between the vehicle and an object.

7. The apparatus of claim 1, wherein the driver state comprises at least one of:
an inattention state in which the driver is determined to be inattentive; or
an undetermined state in which the driver state is not determined due to a sensing failure or a monitoring constraint.

8. The apparatus of claim 1, wherein the at least one instruction, when executed by the processor communicating with the memory, is configured to cause the apparatus to determine, based on historical driving data of the driver, the grip conditions.

9. The apparatus of claim 1, wherein the vehicle state comprises a state in which sensor value input is not allowed due to a sensor of the vehicle being obscured.

10. The apparatus of claim 1, wherein the at least one instruction, when executed by the processor communicating with the memory, is configured to cause the apparatus to further determine, based on feedback data of the driver in response to the notification, the grip conditions.

11. The apparatus of claim 1, wherein the at least one instruction, when executed by the processor communicating with the memory, is configured to cause the apparatus to determine, based on a surrounding environmental state of the vehicle, the grip conditions.

12. The apparatus of claim 11, wherein the surrounding environmental state comprises at least one of:
a road state,
a weather state, or
a state of an object adjacent to the vehicle.

13. A method performed by an apparatus of a vehicle, the method comprising:
determining, via a sensor of the vehicle, whether grip conditions of a steering wheel of the vehicle are satisfied, wherein the grip conditions are related to an output of a notification for requesting grip of the steering wheel to a driver of the vehicle, and wherein the output of the notification is based on at least one of a vehicle state of the vehicle during autonomous driving of the vehicle or a driver state of the driver during autonomous driving of the vehicle; and
based on the determining of whether the grip conditions are satisfied, outputting a signal indicating whether to generate the notification or whether to release a previously generated notification , and
based on the signal, performing at least one of: monitoring a grip on the steering wheel or adjusting the autonomous driving of the vehicle.

14. The method of claim 13, further comprising outputting, via a user interface of the vehicle, content of the grip conditions, wherein the grip conditions are determined to be satisfied.

15. The method of claim 13, further comprising outputting, via a user interface of the vehicle and based on activation of autonomous driving of the vehicle, information indicating that the grip conditions are variably set.

16. The method of claim 13, wherein the determining of whether the grip conditions are satisfied comprises, based on accumulated driving data of the driver prior to activation of the autonomous driving of the vehicle, determining whether the grip conditions are satisfied, and
wherein the grip conditions comprise at least one of:
a number of grip areas required to be detected on the steering wheel,
a location of the grip areas on the steering wheel,
an area of contact on the steering wheel,
a strength level of the grip on the steering wheel, or
a time duration for which the grip areas are maintained on the steering wheel.

17. The method of claim 13, wherein the determining of whether the grip conditions are satisfied comprises, based on historical driving data of the driver, determining whether the grip conditions are satisfied.

18. A vehicle comprising:
a sensor;
a processor; and
a memory storing at least one instruction that, when executed by the processor communicating with the memory, is configured to cause the vehicle to:
obtain, via the sensor, during autonomous driving of the vehicle, state information comprising at least one of a vehicle state of the vehicle or a driver state of a driver of the vehicle,
identify, based on the state information, grip conditions to be satisfied by the driver when gripping a steering wheel of the vehicle,
determine, via a sensor associated with the steering wheel, whether the driver satisfies the grip conditions,
output, based on a determination that the grip conditions are not satisfied, a signal requesting grip of the steering wheel, and
adjust autonomous driving control of the vehicle based on whether the grip conditions are satisfied in response to the signal.

19. The vehicle of claim 18, wherein the state information comprises at least one of:
accumulated driving data of the driver,
feedback data of the driver for the signal, or
a surrounding environmental state of the vehicle comprising a road state, a weather state, or a state of an object adjacent to the vehicle.

20. The vehicle of claim 18, wherein the adjusting of the autonomous driving control comprises:
restricting at least one autonomous driving function of the vehicle, or
transitioning control of the vehicle from an autonomous driving mode to a manual driving mode based on the grip conditions remaining unsatisfied for a predetermined time after the output of the signal.
